# EUROPEAN PATENT SPECIFICATION

(11) **EP 2 767 777 B1**
(45) Date of publication and mention of the grant of the patent: **11.12.2019**
(21) Application number: 14155413.9
(22) Date of filing: 17.02.2014
(51) Int. Cl.: F24F 13/30, F28F 27/02, F24F 12/00, F24F 13/10, F28D 9/00

(54) **A heat exchanger device for use in a ventilation unit and a method of operating the same**
Wärmetauschervorrichtung zur Verwendung in einer Lüftungseinheit und Verfahren zum Betrieb desselben
Dispositif échangeur de chaleur destiné à être utilisé dans une unité de ventilation et méthode d'emploi de l'échangeur

(30) Priority: 15.02.2013 GB 201302663
(43) Date of publication of application: 20.08.2014
(73) Proprietor: NuAire Limited, Caerphilly Mid Glamorgan CF8 1XH (GB)
(72) Inventor: Biggs, Colin, Caerphilly, CF83 1XH (GB)
(74) Representative: Jones, David Alan

(56) References cited:
- EP-A1- 2 546 581
- SE-B- 463 944

## Description

The present invention relates to a heat exchanger device for use in a ventilation unit.

In particular the invention relates to a heat exchanger device for use in a ventilation unit in which heat recovery is utilised. Heat recovery devices, sometimes referred to as recuperators are well known in the ventilation industry and are commonly used to transfer heat that is available in an extract airstream (and which would otherwise be rejected to the outside environment) to the fresh air supply airstream where it is used to provide a beneficial heating effect, reducing the additional heating required to raise the temperature of this airstream to a level acceptable for supply to an occupied room.

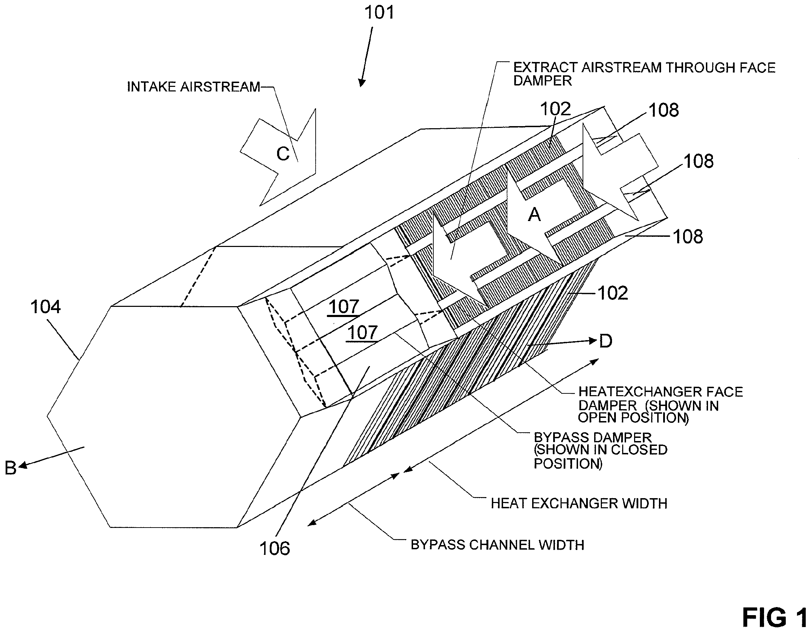

A typical prior art heat exchanger device 101 is shown schematically in figure 1 and comprises a stack of spaced apart thin plates 102 arranged to provide separate air flow path arrays (passage arrays) such that the two air streams at different temperatures can flow between the plates across the heat exchanger device between separate inlet and outlet sides for each air flow path array. The plates 102 are arranged such that heat is transferred from the warmer stream passing in the first array, through the plate material by conduction, to the cooler stream passing in the second flow path array. In the recuperator heat exchanger device the plates are arranged and the air passages alternately sealed so that the air streams are separated into the separate air flow path arrays and do not mix. Figure 1 shows an extract (warm) airstream inlet side at arrow A, that exits the heat exchanger at arrow B. Intake airstream (arrow C) inlets into the heat exchanger device and exits at arrow D.

Although the heat recovery process is beneficial in many operating conditions, it is not always required, and provision needs to be made to allow for the heat exchanger device to be bypassed by one of the airstreams. This provision is commonly made by reducing the length of the heat exchanger component (i.e. the number of airflow channels in the airflow array), and substituting part of its length with a bypass channel. The bypass channel is shown in figure 1 at 106.

In operation, the face of the heat exchanger and the bypass channel are provided with shutoff dampers which an opposing but linked or interlocked action, such that when the heat exchanger channel is open, the bypass channel is closed and vice versa. Intermediate positions of the dampers may be used to provide a degree of regulation of the heat recovery performance. In figure 1 the bypass channel 106 is shown with the shut off dampers 107 in a closed position. The shut of dampers 108 for the extract airstream intake are shown in the open position.

This method has a number of disadvantages that the current invention addresses.

In the arrangement of figure 1, the heat recovery energy benefit is partly offset by the additional resistance to airflow caused by constricting the flow through the heat exchange plates. In a heat exchanger without bypass, the effective airflow area is less than half of the physical face area of the heat exchange device. This additional resistance must be overcome bv the fans in each airstream, increasing their energy consumption and capital cost.

EP 2 546 581 A1 discloses another heat exchanger device for use in a ventilation unit comprising a first fluid flow path array and a second fluid flow path array being in heat exchange contact and a plurality of closure elements arranged on the first fluid flow path array for directing airflow into a bypass.

When provision for bypass is made, the effective area is further reduced by approximately one third leading to a further pressure loss. Again the fans must be uprated to deal with the additional pressure with the consequent penalties in energy use and cost.

An improved device has now been devised.

According to a first aspect of the present invention, there is provided a heat exchanger device for use in a ventilation unit as defined in claim 1. Preferred embodiments are defined in the dependent claims.

As a result of zoning, the hot and cold air streams are prevented from passing though adjacent channels of the heat exchanger in the respective zones, and thus little or no transfer of heat can occur and the bypass function is provided

It is preferred that in a second mode of operation the fluid channel arrays are not zoned and flow is permitted in the channels in both arrays for a given zone.

It is preferred that the fluid channel arrays are zoned such that flow is preferred/permitted in alternate flow path arrays in adjacent zones.

Beneficially, the zoning is effective by selectively closing or masking zones of:
i) the first fluid inlet side to the heat exchanger device; and/or
ii) the second fluid inlet side to the heat exchanger device.

A closure element is preferably provided for selectively closing or masking zones. A respective closure element is preferably provided for the first fluid inlet side to the heat exchanger device; and the second fluid inlet side to the heat exchanger device. The respective closure element is preferably movable between a first position in which zones are masked or closed and a second position in which zones are un-masked or open. In certain embodiments it is preferred that the respective closure element is hinge or pivotally mounted to move between the respective positions.

It is preferred that a respective closure element includes open portions and blocking portions.

It is preferred that a respective closure element is provided for the first fluid inlet side to the heat exchanger device and the second fluid inlet side to the heat exchanger device; each respective closure element includes open portions and blocking portions, the blocking portions and open portions being mis-matched on each closure element.

It is preferred that the respective closure elements being controlled to operate in concert.

In a preferred embodiment, the fluid flow path arrays are defined by adjacent spaced walls or plates, preferably such that the spaced walls or plates define the fluid channels, flow in adjacent channels preferably being in contra directions and alternate flow path arrays.

According to a further aspect, the invention provides a method of operating heat exchanger device for a ventilation unit as defined in claim 11.

The current invention consists of a novel method for providing the bypass function.

The preferred embodiment of the invention consists of a pair of hinged plates that are synchronously operated to lie across the entire opposing entry faces of the heat exchanger device.

Preferred features in respect of the first aspect of the invention may also be preferred in respect of the second.

The invention will now be further described, by way of example only and with reference to the accompanying drawings, in which:
Figure 1 is a schematic representation of a prior art heat exchanger device for use in a ventilations system or unit.
Figure 2A is a schematic plan view representation of an exemplary heat exchanger device in accordance with the invention configured in a first mode of operation (heat exchange mode);
Figure 2B is a schematic side view representation of the device of figure 2A;
Figure 3A is a schematic representation of the heat exchanger device of figure 2 in an alternative mode of operation (by pass mode);
Figure 3B is a schematic side view representation of the device of figure 3A;
Figure 4 is a schematic explanatory view of the device of figures 2 and 3.

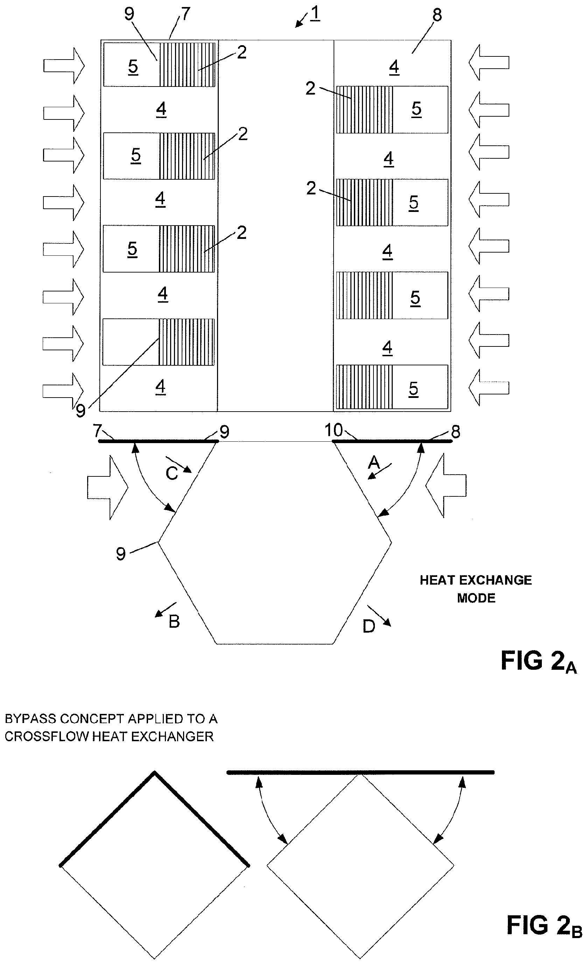

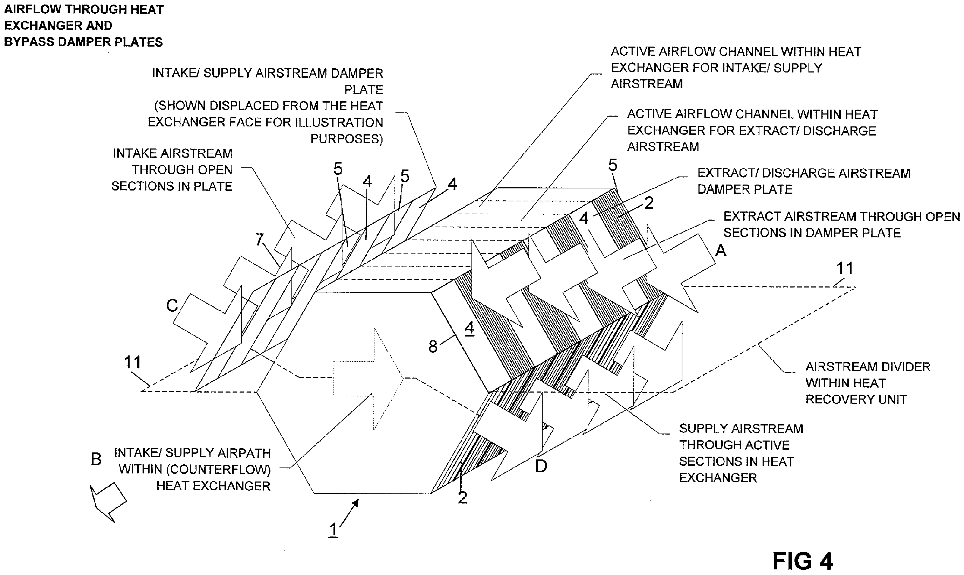

The prior art device of figure 1 has already been described. The heat exchanger device of the present invention is shown in figures 2, 3 and 4. The heat exchanger device 1 has a similar stacked plate 2 construction to the prior art heat exchanger device 101. The heat exchanger device 1 comprises a stack of spaced apart thin plates 2 arranged to provide separate air flow path arrays (passage arrays) such that two air streams at different temperatures can flow between the plates across the heat exchanger device between separate inlet and outlet sides for each air flow path array. The plates 2 are arranged such that heat is transferred from the warmer stream passing in the first array, through the intervening plate 2 material by conduction, to the cooler stream passing in the second flow path array. In the heat exchanger device the plates are arranged and the air channels alternately sealed so that the air streams are separated into the separate air flow path arrays and do not mix. Figure 2 shows an extract (warm) airstream inlet side at arrow A, that exits the heat exchanger at arrow B. Intake airstream (arrow C) inlets into the heat exchanger device and exits at arrow D.

This provides a first fluid flow path array comprising a plurality of fluid channels having a first fluid inlet side to the heat exchanger device and first fluid outlet side from the heat exchanger device. A second fluid flow path array comprising a plurality of fluid channels through the heat exchanger device having a second fluid inlet side to the heat exchanger device and a second fluid outlet side from the heat exchanger device, the first and second fluid pathway arrays being in heat exchange contact, via intervening heat exchange surfaces (i.e. the plate material).

The ventilation unit is divided by means of an internal airstream divider wall 11 to keep the airflows separate.

In accordance with the invention, in a first mode of operation means is provided for selectively zoning the respective fluid channel arrays such that for a given zone flow is permitted in one of the arrays whilst being inhibited in the other.

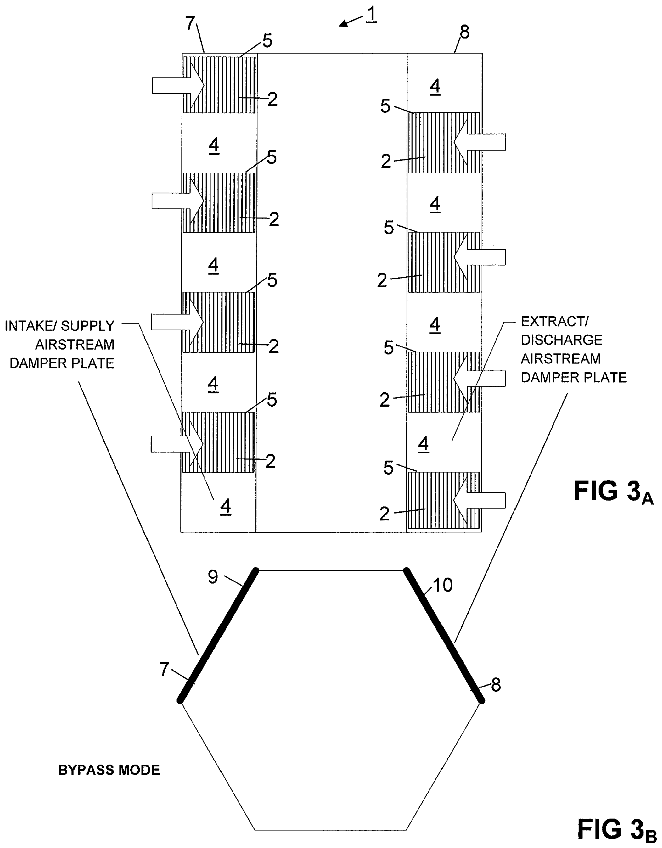

In the device of figures 2 and 3 this is achieved by means of hinge mounted blocking or masking plates 7,8 which act as closure elements to mask or block inlet airflow at selected zones whilst permitting inlet flow into the arrays at other selected zones. The hinged plates 7, 8 have alternate (inlet obscuring or closing) zones 4 and cut-out apertures or open zones 5 distributed across its face. The inlet obscuring or closing zones 4 act, when in the bypass mode position of figures 3, to close off inlet zones of the air inlets on both sides of the heat exchanger plate stack 2. In this configuration air is permitted to pass into the inlet sides of the channel arrays via the cut-out apertures or open zones 5. As a result, the respective fluid channel arrays are selectively zoned such that for a given zone flow is permitted in one of the arrays whilst being inhibited in the other.

In the plan view figure 2A the plates 2 of the heat exchanger device can be partially seen through the cut out aperture 5 up to the edge 9. In the plan view of figure 3 the plates 2 completely fill the view through the cut out aperture 5.

The position of the blanking (inlet obscuring or closing) zones 4 and cut-out open zones 5 in the second plate 8 are offset or mis-matched from those in the first plate 7 such that when both plates are in the closed (bypass) position as shown in figures 3, the respective fluid channel arrays are selectively zoned such that for a given zone flow is permitted in one of the arrays whilst being inhibited in the other. As a result the hot and cold air streams are prevented from passing though adjacent channels of the heat exchanger in the respective zones, and thus little or no transfer of heat can occur and the bypass function is provided. In bypass mode there is only flow of opposed airflows in adjacent channels at the boundaries of the zones.

The plates are hinged at hinges 9, 10, and are shown in figures 2 in open mode in which full heat exchange is permitted between the air flows in the cross flow air channel arrays. Conversely in figures 3 the plates are positioned in by pass mode as has been described. The operation of the plates to move between the open and bypass configurations is controlled such that the plates are operated in concert with one another.

A benefit of the heat exchanger device of the invention is that when in the open position, the plates do not impede the flow of air through the heat exchanger, and the full potential width of the heat exchanger may be utilised.

Since in the majority of climate types where the beneficial use of heat recovery is indicated, the majority of operating time is spent in heat recovery mode, this method of bypass control may provide substantial advantages over conventional bypass methods. These advantages are due to the larger heat exchange area available (relative to a given equipment space). This feature provides greater heat transfer efficiency, since the air velocities are lower, and for the same reason a reduced pressure loss, resulting in lower operating pressures for the fans and the consequent reduction in power consumption. A secondary benefit is that with the current invention, the airflow in bypass mode is well distributed across the faces of the heat exchanger, rather than being confined to a bypass path in one location. This distribution of airflow beneficially affects the operation of the entire ventilation unit.

A further potential benefit of the proposed system is that the hinged plate arrangement offers a very compact arrangement for bypass provision, operating largely within the projected rectangular spacial envelope of the heat recovery device.

Whilst the device has primarily been described with a specific implementation using hinged closure plates, it should be readily appreciated that other implementations could be used and achieve the main benefit of the invention arising as a result of the zoning of the airflow channels, to provide the bypass function.

## Claims

1. A heat exchanger device for use in a ventilation unit, the heat exchanger device having:
i) a first fluid flow path array comprising a plurality of fluid channels having a first fluid inlet side to the heat exchanger device and first fluid outlet side from the heat exchanger device;
ii) a second fluid flow path array comprising a plurality of fluid channels through the heat exchanger device having a second fluid inlet side to the heat exchanger device and a second fluid outlet side from the heat exchanger device, the first and second fluid pathway arrays being in heat exchange contact, via intervening heat exchange surfaces; and
closure elements arranged in a first mode of operation to block the first and second fluid flow path arrays at selected zones while permitting flow through the first and second fluid flow path arrays at other selected zones, the closure elements being arranged such that for a given zone flow is permitted in one of the first and second fluid flow path arrays whilst being inhibited in the other to prevent flow through adjacent channels of the heat exchanger in the respective zones to create a bypass function in which little or no heat exchange can occur.

2. A heat exchanger device according to claim 1, wherein in a second mode of operation the fluid channel arrays are not zoned and flow is permitted in the channels in both arrays for a given zone.

3. A heat exchanger device according to claim 1 or claim 2, wherein the fluid channel arrays are zoned such that flow is preferred/permitted in alternate flow path arrays in adjacent zones.

4. A heat exchanger device according to any preceding claim, wherein the zoning is effective by selectively closing or masking zones of:
i) the first fluid inlet side to the heat exchanger device; and/or
ii) the second fluid inlet side to the heat exchanger device.

5. A heat exchanger device according to any preceding claim wherein the respective closure elements are movable between a first position in which zones are masked or closed and a second position in which zones are un-masked or open.

6. A heat exchanger device according to claim 5, wherein the respective closure element is hinge or pivotally mounted to move between the respective positions.

7. A heat exchanger device according to any preceding claim wherein each respective closure element includes open portions and blocking portions.

8. A heat exchanger device according to any of claims 5 to 7, wherein a first closure element is provided for the first fluid inlet side to the heat exchanger device and a second closure element is provided for the second fluid inlet side to the heat exchanger device; each respective closure element includes open portions and blocking portions, the blocking portions and open portions of the first closure element being offset from the blocking portions and open portions of the second closure element.

9. A heat exchanger device according to any preceding claim, wherein the fluid flow path arrays are defined by adjacent spaced walls or plates.

10. A heat exchanger device according to claim 9 wherein the spaced walls or plates define the fluid channels, flow in adjacent channels being in contra directions and alternate flow path arrays.

11. A method of operating a heat exchanger device for a ventilation unit, having a first fluid flow path array comprising a plurality of fluid channels having a first fluid inlet side to the heat exchanger device and first fluid outlet side from the heat exchanger device; and a second fluid flow path array comprising a plurality of fluid channels through the heat exchanger device having a second fluid inlet side to the heat exchanger device and a second fluid outlet side from the heat exchanger device, the first and second fluid pathway arrays being in heat exchange contact, via intervening heat exchange surfaces; and closure elements arranged to block the first and second fluid flow path arrays at selected zones while permitting flow through the first and second fluid flow path arrays at other selected zones;
wherein, in a first mode of operation_the closure elements are arranged such that for a given zone flow is permitted in one of the first and second fluid flow path arrays whilst being inhibited in the other to prevent flow through adjacent channels of the heat exchanger in the respective zones to create a bypass function in which little or no heat exchange can occur.

12. A method according to claim 11, wherein in a second mode of operation blocking of the zones of the first and second fluid flow path arrays does not take place.

## Patentansprüche

1. Wärmetauschervorrichtung zur Verwendung in einer Lüftungseinheit, wobei die Wärmetauschervorrichtung Folgendes aufweist:
i) eine erste Fluidströmungsweganordnung, die mehrere Fluidkanäle umfasst, die eine erste Fluideinlassseite zur Wärmetauschervorrichtung und eine erste Fluidauslassseite von der Wärmetauschervorrichtung aufweisen;
ii) eine zweite Fluidströmungsweganordnung, die mehrere Fluidkanäle durch die Wärmetauschervorrichtung umfasst, die eine zweite Fluideinlassseite zur Wärmetauschervorrichtung und eine zweite Fluidauslassseite von der Wärmetauschervorrichtung aufweisen, wobei die erste und zweite Fluidströmungsweganordnung über zwischengelagerte Wärmetauscherflächen in wärmetauschendem Kontakt stehen; und
Schließelemente, die in einem ersten Betriebsmodus angeordnet sind, um die erste und zweite Fluidströmungsweganordnung in ausgewählten Bereichen zu blockieren, während die Strömung durch die erste und zweite Fluidströmungsweganordnung in anderen Bereichen zugelassen wird, wobei die Schließelemente derart angeordnet sind, dass die Strömung für einen gegebenen Bereich in der ersten oder zweiten Fluidströmungsweganordnung zugelassen wird, während sie in der anderen Anordnung gehemmt wird, um die Strömung durch angrenzende Kanäle des Wärmetauschers in die entsprechenden Bereiche zu verhindern, um eine Umgehungsfunktion zu erzeugen, in der ein geringer oder kein Wärmeaustausch auftreten kann.

2. Wärmetauschervorrichtung nach Anspruch 1, wobei die Fluidkanalanordnungen in einem zweiten Betriebsmodus nicht unterteilt sind und die Strömung in den Kanälen in beiden Anordnungen in einem gegebenen Bereich zugelassen wird.

3. Wärmetauschervorrichtung nach Anspruch 1 oder Anspruch 2, wobei die Fluidkanalanordnungen so unterteilt sind, dass die Strömung in alternierenden Strömungsweganordnungen in angrenzenden Bereichen bevorzugt/zugelassen wird.

4. Wärmetauschervorrichtung nach einem der vorstehenden Ansprüche, wobei das Unterteilen bewirkt wird, indem die folgenden Bereiche selektiv geschlossen oder verdeckt werden:
i) die erste Fluideinlassseite zur Wärmetauschervorrichtung; und/oder
ii) die zweite Fluideinlassseite zur Wärmetauschervorrichtung.

5. Wärmetauschervorrichtung nach einem der vorstehenden Ansprüche, wobei die jeweiligen Schließelemente zwischen einer ersten Position, in der die Bereiche verdeckt oder geschlossen sind, und einer zweiten Position, in der die Bereiche aufgedeckt oder offen sind, beweglich sind.

6. Wärmetauschervorrichtung nach Anspruch 5, wobei das jeweilige Schließelement gelenkig oder verschwenkbar montiert ist, um sich zwischen den jeweiligen Positionen zu bewegen.

7. Wärmetauschervorrichtung nach einem der vorstehenden Ansprüche, wobei jedes jeweilige Schließelement offene Abschnitte und Blockierabschnitte enthält.

8. Wärmetauschervorrichtung nach einem der Ansprüche 5 bis 7, wobei ein erstes Schließelement für die erste Fluideinlassseite zur Wärmetauschervorrichtung vorgesehen ist und ein zweites Schließelement für die zweite Fluideinlassseite zur Wärmetauschervorrichtung vorgesehen ist; wobei jedes jeweilige Schließelement offene Abschnitte und Blockierabschnitte enthält, wobei die Blockierabschnitte und offenen Abschnitte des ersten Schließelements zu den Blockierabschnitten und offenen Abschnitten des zweiten Schließelements versetzt sind.

9. Wärmetauscher nach einem der vorstehenden Ansprüche, wobei die Fluidströmungsweganordnungen durch angrenzende beabstandete Wände oder Platten definiert werden.

10. Wärmetauschervorrichtung nach Anspruch 9, wobei die beabstandeten Wände oder Platten die Fluidkanäle definieren, wobei die Strömung in angrenzenden Kanälen in entgegengesetzte Richtungen und alternierenden Strömungsweganordnungen erfolgen.

11. Verfahren zum Betreiben einer Wärmetauschervorrichtung für eine Lüftungseinheit, die eine erste Fluidströmungsweganordnung, die mehrere Fluidkanäle umfasst, die eine erste Fluideinlassseite zur Wärmetauschervorrichtung und eine erste Fluidauslassseite von der Wärmetauschervorrichtung aufweisen; und eine zweite Fluidströmungsweganordnung, die mehrere Fluidkanäle durch die Wärmetauschervorrichtung umfasst, die eine zweite Fluideinlassseite zur Wärmetauschervorrichtung und eine zweite Fluidauslassseite von der Wärmetauschervorrichtung aufweisen, aufweist, wobei die erste und zweite Fluidströmungsweganordnung über zwischengelagerte Wärmetauscherflächen in wärmetauschendem Kontakt stehen; und Schließelemente, die dazu angeordnet sind, die erste und zweite Fluidströmungsweganordnung in ausgewählten Bereichen zu blockieren, während die Strömung durch die erste und zweite Fluidströmungsweganordnung in anderen ausgewählten Bereichen zugelassen wird;
wobei die Schließelemente in einem ersten Betriebsmodus derart angeordnet sind, dass die Strömung für einen gegebenen Bereich in der ersten oder zweiten Fluidströmungsweganordnung zugelassen wird, während sie in der anderen Anordnung gehemmt wird, um die Strömung durch angrenzende Kanäle des Wärmetauschers in den entsprechenden Bereichen zu verhindern, um eine Umgehungsfunktion zu erzeugen, in der ein geringer oder kein Wärmeaustausch auftreten kann.

12. Verfahren nach Anspruch 11, wobei das Blockieren der Bereiche der ersten und zweiten Fluidströmungsweganordnung in einem zweiten Betriebsmodus nicht stattfindet.

## Revendications

1. Dispositif échangeur de chaleur destiné à être utilisé dans une unité de ventilation, le dispositif échangeur de chaleur comportant:
i) un premier réseau de passages d'écoulement de fluide comprenant une pluralité de canaux de fluide ayant un premier côté d'entrée de fluide vers le dispositif échangeur de chaleur et un premier côté de sortie de fluide depuis le dispositif échangeur de chaleur;
ii) un second réseau de passages d'écoulement de fluide comprenant une pluralité de canaux de fluide à travers le dispositif échangeur de chaleur ayant un second côté d'entrée de fluide vers le dispositif échangeur de chaleur et un second côté de sortie de fluide depuis le dispositif échangeur de chaleur, les premier et second réseaux de passages de fluide étant en contact par échange thermique, via des surfaces intermédiaires d'échange thermique; et
des éléments de fermeture disposés dans un premier mode de fonctionnement pour bloquer les premier et second réseaux de passages d'écoulement de fluide dans des zones sélectionnées tout en permettant l'écoulement à travers les premier et second réseaux de passages d'écoulement de fluide dans d'autres zones sélectionnées, les éléments de fermeture étant disposés de telle sorte que pour une zone donnée, l'écoulement est autorisé dans l'un des premier et second réseaux de passages d'écoulement de fluide tout en étant inhibé dans l'autre pour empêcher l'écoulement à travers les canaux adjacents de l'échangeur thermique dans les zones respectives pour créer une fonction de dérivation dans laquelle peu ou aucun échange thermique peut se produire.

2. Dispositif échangeur de chaleur selon la revendication 1, dans lequel, dans un second mode de fonctionnement, les réseaux de canaux de fluide ne sont pas zonés et l'écoulement est autorisé dans les canaux des deux réseaux pour une zone donnée.

3. Dispositif échangeur de chaleur selon la revendication 1 ou la revendication 2, dans lequel les réseaux de canaux de fluide sont zonés de telle sorte que l'écoulement est préféré/permis dans des réseaux de passages d'écoulement alternés dans des zones adjacentes.

4. Dispositif échangeur de chaleur selon l'une quelconque des revendications précédentes, dans lequel le zonage est efficace en fermant ou en masquant sélectivement des zones:
i) du premier côté d'entrée du fluide dans le dispositif échangeur de chaleur; et/ou
ii) du second côté d'entrée du fluide dans le dispositif échangeur de chaleur.

5. Dispositif échangeur de chaleur selon l'une quelconque des revendications précédentes, dans lequel les éléments de fermeture respectifs sont mobiles entre une première position dans laquelle les zones sont masquées ou fermées et une seconde position dans laquelle les zones sont non masquées ou ouvertes.

6. Dispositif échangeur de chaleur selon la revendication 5, dans lequel l'élément de fermeture respectif est monté sur charnière ou pivotant pour se déplacer entre les positions respectives.

7. Dispositif échangeur de chaleur selon l'une quelconque des revendications précédentes, dans lequel chaque élément de fermeture respectif comprend des parties ouvertes et des parties de blocage.

8. Dispositif échangeur de chaleur selon l'une quelconque des revendications 5 à 7, dans lequel un premier élément de fermeture est prévu pour le premier côté d'entrée de fluide vers le dispositif échangeur de chaleur et un second élément de fermeture est prévu pour le second côté d'entrée de fluide vers le dispositif échangeur de chaleur; chaque élément de fermeture respectif comprend des parties ouvertes et des parties de blocage, les parties de blocage et les parties ouvertes du premier élément de fermeture étant décalées des parties de blocage et des parties ouvertes du second élément de fermeture.

9. Dispositif échangeur de chaleur selon l'une quelconque des revendications précédentes, dans lequel les réseaux de passages d'écoulement de fluide sont définis par des parois ou des plaques espacées adjacentes.

10. Dispositif échangeur de chaleur selon la revendication 9, dans lequel les parois ou plaques espacées définissent les canaux de fluide, l'écoulement dans des canaux adjacents étant dans des sens contraires et dans des réseaux de passages d'écoulement alternés.

11. Procédé de fonctionnement d'un dispositif échangeur de chaleur pour une unité de ventilation, ayant un premier réseau de passages d'écoulement de fluide comprenant une pluralité de canaux de fluide ayant un premier côté d'entrée de fluide vers le dispositif échangeur de chaleur et un premier côté de sortie de fluide depuis le dispositif échangeur de chaleur; et un second réseau de passages d'écoulement de fluide comprenant une pluralité de canaux de fluide à travers le dispositif échangeur de chaleur ayant un second côté d'entrée de fluide vers le dispositif échangeur de chaleur et un second côté de sortie de fluide depuis le dispositif échangeur de chaleur, les premier et second réseaux de passages d'écoulement de fluide étant en contact par échange thermique, via des surfaces d'échange thermique intermédiaires, et des éléments de fermeture disposés pour bloquer les premier et second réseaux de passages d'écoulement de fluide dans des zones sélectionnées tout en permettant un écoulement dans les premiers et seconds réseaux de passages d'écoulement de fluide au niveau d'autres zones sélectionnées;
dans un premier mode de fonctionnement, les éléments de fermeture étant agencés de telle sorte que, pour une zone donnée, l'écoulement est autorisé dans l'un des premier et second réseaux de passages d'écoulement de fluide tout en étant inhibé dans l'autre pour empêcher l'écoulement dans des canaux adjacents de l'échangeur thermique dans les zones respectives pour créer une fonction de dérivation dans laquelle peu ou aucun échange thermique peut se produire.

12. Procédé selon la revendication 11, dans lequel, dans un second mode de fonctionnement, on ne bloque pas les zones des premier et second réseaux de passages d'écoulement de fluide.
